# EUROPEAN PATENT APPLICATION

(11) **EP 1 306 706 A1**
(43) Date of publication of application: **02.05.2003**
(21) Application number: 02253617.1
(22) Date of filing: 22.05.2002
(51) Int. Cl.: G02B 6/38

(54) **Optical connector assembly**

(30) Priority: 25.10.2001 US 35475
(71) Applicant: LUCENT TECHNOLOGIES INC., Murray Hill, New Jersey 07974-0636 (US)
(72) Inventor: Bethea, Clyde G., Franklin Park, New Jersey 08823 (US); Franey, John P., Bridgewater, New Jersey 08807 (US); Reents, William D., Middlesex, New Jersey 08846 (US); Valdes, Jorge L., Branchburg, New Jersey 07921 (US)
(74) Representative: Watts, Christopher Malcolm Kelway, Dr.

(57) **Abstract**

An apparatus and method that prevents a damaging movement -in any plane- between optical fiber ends (103,203) within a connector assembly (100), where a damaging movement is a movement of the fiber ends (103,203) with the connector assembly (100) which may give rise to a damaging thermal event while an optical power source (152) is generating a high-optical-power-density signal that is propagated through the fibers (102,202). A prevention mechanism integral to the connector assembly (100) precludes damaging movement. The prevention mechanism includes a) a locking mechanism that precludes any damaging movement while engaged and b) an indication generator that upon being engaged or disengaged generates an indication that can be used to control the on/off state of the optical power source (152).

## Description

### Background of the Invention

This invention relates to optical communication systems and, more particularly, to connectors used in such systems.

Optical communication systems require connectors to interconnect sections of optical fiber cable, referred to herein more simply as "fiber". It is well known that problems can arise in high-optical-power-density applications if a connector is either engaged or disengaged while optical energy is propagating through the connected fibers, and thus through the connector itself. In particular, a change in the distance between the fibers, such as by separating them in the process of disengaging the connector or bringing them together in the process of engaging the connector, can give rise to optical-flux-induced damage due to dissipation of optical power. This may cause significant local heating, and consequent physical damage, being referred to herein as a "damaging thermal event". Another problem that occurs when the connector is disengaged is the potential for injury to personnel due to exposure to damaging optical energy.

In order to address these issues it is known to provide a mechanism that insures that the optical power source is off whenever the connector is engaged or disengaged. For example, U.S. Patent 5,999,411 issued December 7, 1999 to N.C. Patel discloses an optical connector protection assembly that encloses the connector in such a way that, advantageously, access to the connector is only available when the optical power source is off.

### Summary of the Invention

The present invention provides yet further advantages. A connector assembly embodying the principles of the invention is lightweight, inexpensive to manufacture, engenders no additional footprint overhead, and is mechanically simple and reliable. These characteristics are particularly advantageous in applications in which many connectors are closely spaced in arrays. A further advantage is that connectors embodying the principles of the invention may be easily retrofitted into existing installations.

The present inventors have realized that even a sub micron movement, referred to herein as a damaging movement, between the fiber ends―in any plane―will cause a misalignment, which may give rise to a damaging thermal event within a matter of nanoseconds. Based on this realization, a connector embodying the principles of the invention includes a mechanism integral to the connector that precludes damaging movement of the fibers within the connector while the optical power source is on.

In illustrative embodiment of the invention, the mechanism includes a) a locking mechanism that precludes any damaging movement while the locking mechanism is engaged and b) an indication generator that upon the locking mechanism being engaged or disengaged, generates an indication that can be used to control the on/off state of the optical power source.

As described above, Patel taught to turn off the power prior to allowing access to the connector assembly. Therefore, by the time there is disengagement of the connector assembly, the optical power supplied to the fiber is off. However, in some systems it is very advantageous to have a connector assembly that has a footprint smaller than that of the mechanism and connector assembly taught in Patel. In such systems it is advantageous to have a solution in which the mechanism is integral to, or embedded in, the connectors of the connector assembly. The prior art does know of electrical connectors with embedded mechanisms that, upon the connector being disengaged, cause the associated electrical power source to be turned off. However, the electrical power source disengagement occurs much longer than the nanoseconds after the initial movement of the contacts of the connectors. Thus, such connectors, even if adapted for optical applications, could not be used in high-optical-power-density applications. It remained for the inventors to realize that even the small movements allowed by the prior art electrical systems would still cause a damaging event.

### Brief Description of the Drawings

Figure 1 shows an end of an optical fiber cable, referred to herein as "fiber";
Figure 2 is an exploded view of an optical connector assembly embodying the principles of the present invention, the connector assembly includes prevention mechanisms that preclude damaging movement of fibers within the connector assembly while an optical power source is on;
Figure 3 illustrates the optical connector assembly of Figure 2 having connectors mated to a mounting receptacle;
Figure 4 is an exploded view that shows, in more detail, an electro-mechanical prevention mechanism of the connector assembly of Figure 2;
Figure 5 is an exploded view that shows, in more detail, another electro-mechanical prevention mechanism of the connector assembly of Figure 2; and
Figure 6 is an exploded view that shows an optical prevention mechanism that can be used in the connector assembly of Figure 2.

### Detailed Description

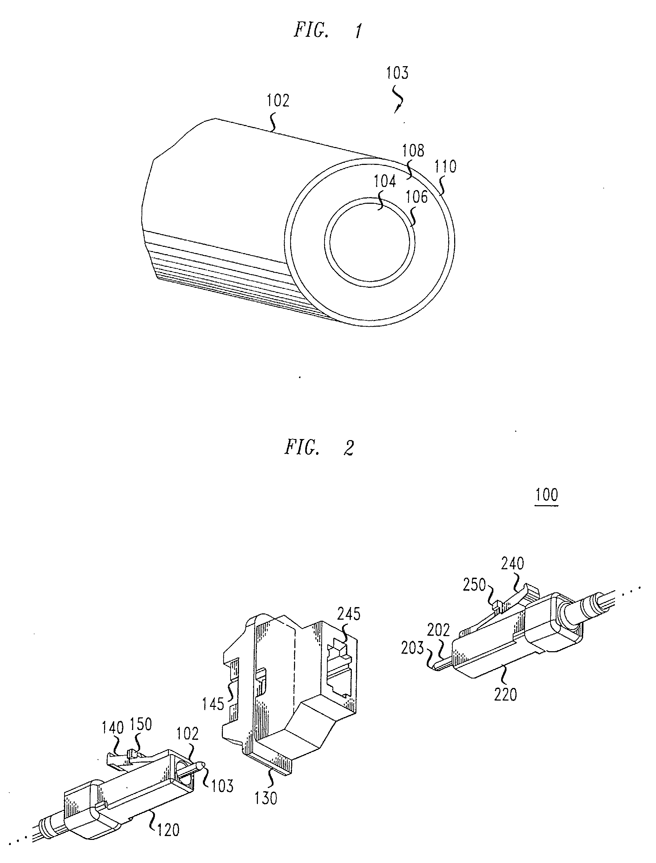

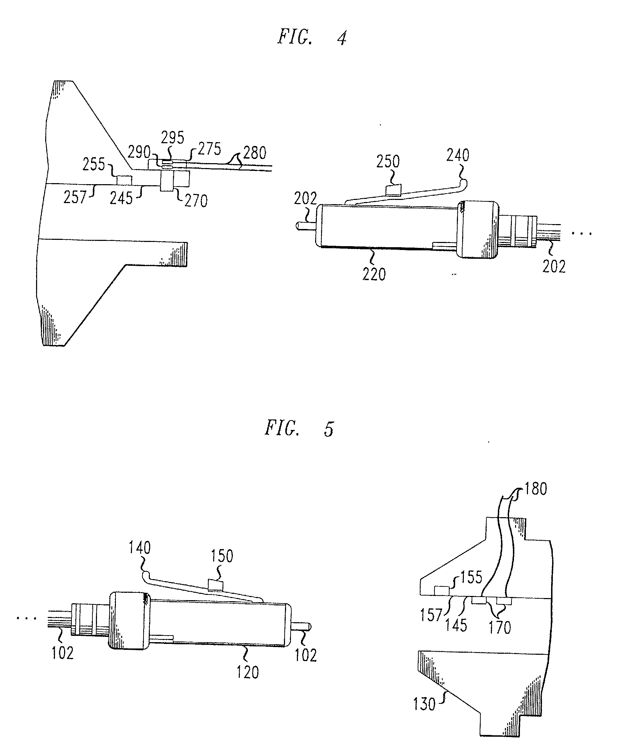

Figure 1 shows fiber 102. As can be seen at exposed end 102 of fiber 102, fiber 102 includes core 104 surrounded by cladding 106, which is surrounded by ferrule 108, which is in turn surrounded by jacket 110. Core 104 is typically made of glass and has a thickness of 1 to 100 µm. Cladding 106, which is around core 104, is also typically made of glass and has a lower index of refraction than core 104. Cladding 106 encloses core 104 so as to act as a waveguide for the signal propagating through the core. Cladding 106 is typically 40 to 120 µm thick. Ferrule 108 surrounds cladding 106. Ferrule 108 is a ceramic ring placed around cladding 106, and provides reinforcement. Ferrule 108 is typically 1 to 3 mm thick. Jacket 110 surrounds ferrule 108 and insulates the fiber. Jacket 110 is made of polymer, such as plastic, and is typically 50 to 900 µm thick. In an illustrative embodiment of the invention, fiber 102 is coupled to fiber 202 within optical connector assembly 100, shown in an exploded view in Figure 2. Optical connector assembly 100 includes male connector 120 and male connector 220, which are typically injection-molded thermal plastic housings. Fiber 102 extends through connector 120 so that its exposed end 103 extends out of connector 120. The ferrule of fiber 102 is locked into place in connector 120, which provides alignment and attachment into a mating structure, such as mounting receptacle 130. Connector 120 is held fixed in mounting receptacle 130 by virtue of tab 140 that locks into shoulder 145. Shoulder 145 is an inner surface of mounting receptacle 130. Tab 140 locks into shoulder 145 when protrusion 150 of tab 140 fits into recess 155 in shoulder 145, which occurs when connector 120 slides to a certain position within mounting receptacle 130. Once locked, connector 120 is not movable with respect to mounting receptacle 130 until tab 140 is depressed the distance necessary for protrusion 150 to clear the point where recess 155 intersects with non-recessed portion 157 (shown in Figure 4) of shoulder 145.

Similarly, fiber 202 extends through connector 220 so that its exposed end 203 extends out of connector 220. Connector 220 is held fixed in mounting receptacle 130 by virtue of tab 240 that locks into shoulder 245, which is also an inner surface of mounting receptacle 130. Similarly to tab 140, tab 240 locks into shoulder 245 when protrusion 250 of tab 240 fits into recess 255 in shoulder 245. Connectors 120, 220 and receptacle 130 are shown unmated.

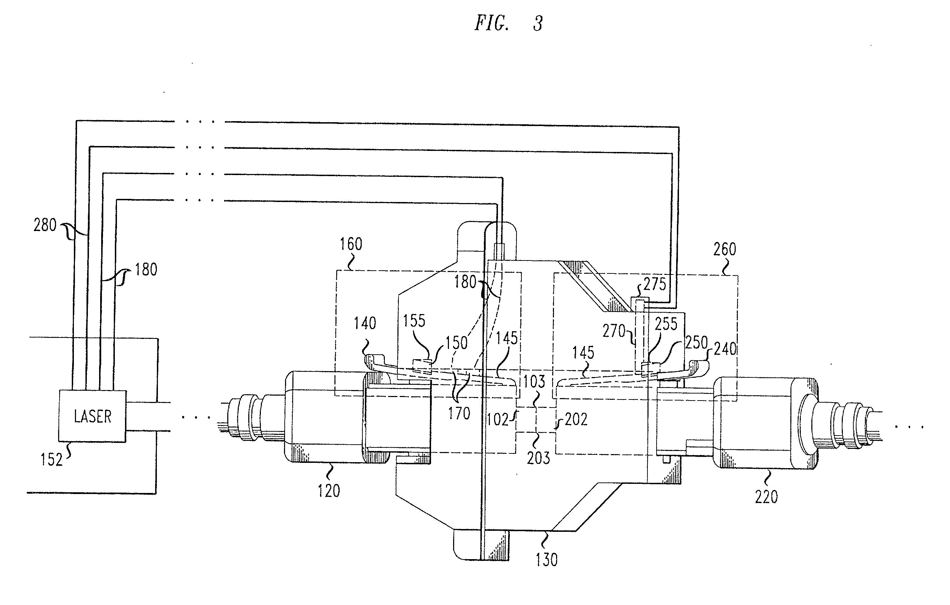

Figure 3 shows connector assembly 100 with connectors 120 and 220 mated to receptacle 130. In the mated position, tab 140 engages shoulder 145 and tab 240 engages shoulder 245. As shown in Figure 3, protrusion 150 of tab 140 fits into recess 155 in shoulder 145, thus locking connector 120 and mounting receptacle 130. Similarly, protrusion 250 of tab 240 fits into recess 255 in shoulder 245, locking connector 220 and mounting receptacle 130. At this point ferrules 108 and 208 are in precise alignment, thereby holding the ends 103 and 203 of fibers 102 and 202, respectively, in precise alignment as well. As a result, fiber 102 is coupled to fiber 202, and light, i.e. an optical signal, from optical power source 152, illustratively a laser, propagates through fiber 102 and passes into fiber 202.

The connection arrangement of Figures 2 and 3 is illustratively used in a high-optical-power-density application. By this is meant that when light is propagating though one of the fibers, the ratio of the optical power of this light propagating through the area of the fiber core, is high enough to induce damage to the fiber core, the core/cladding interface, or the cladding. Such a ratio can typically be on the order of 100,000 watts/cm² for glass. That is, the light propagating through the fiber is a high-optical-power-density signal having an optical power of at least 1M watt per cm² of the thickness of the core. The damage that can be induced by such a signal can result in any number of ways. Notable among these is optical insertion loss―the power loss of the optical signal across the exposed ends 103 and 203 of fibers 102 and 202 respectively----and significant local heating. Typically, the optical insertion loss is due to misalignment and/or contamination of the two fibers 102 and 202, or imperfection in the surfaces of exposed ends 103 or 203 of fibers 102 and 202, respectively, or defects in fiber 102 or 202 or in exposed ends 103 or 203. The local heating is typically due to dissipation of optical power, such as a dissipation of optical power that is above the damage threshold of the fiber. The damage threshold of the fiber is the minimum amount of power that at a particular wavelength and with either a misalignment or a specific contaminant, will induce a temperature rise that will cause permanent damage to the fiber. For example, if in a typical communication grade fiber (such as a germanium core fiber) there is a misalignment (such as occurs during disconnection) of the surface of exposed ends 103 or 203 and the wavelength of the laser is 980 nm, then the damage threshold can be as low as 1,000,000 watts per cm². Such local heating and/or optical insertion loss may occur when a connector is engaged or disengaged while optical energy is propagating through the connected fibers, and may be a result of optical flux being trapped at the fiber interface (between the fiber ends) occurring due to axial misalignment and/or a change in the volume at the fiber interface. The ultimate result can be permanent damage to fiber(s) 102 and/or 202, and other equipment of the optical communication system, such as connector assembly 100, or optical power source 152. Such a phenomenon is referred to herein as a damaging thermal event.

Additionally, a damaging thermal event may cause any or all of the following: 1) thermal runaway―a condition where the damage caused by the local heating and optical insertion loss are at a level where this damage generates further local heating and insertion loss; 2) changes in the characteristic of the fiber performance by changing the physical characteristics of the fiber structure (which includes the fiber core, cladding, the ferrule, the jacket, etc..); 3) creation of extraneous particulates in the interface volume. All three of the above can further increase the damaging effect of the damaging thermal event.

The present inventors have realized that even the smallest of movements, referred to herein as a damaging movement, between the fiber ends, in any plane, will cause a misalignment, and may give rise to a damaging thermal event within a matter of nanoseconds. The damaging movement can be a movement in any plane of the size of at least 1 wavelength of the laser, but preferably a damaging movement can be a movement in any plane of at least ¼ wavelength of the laser. Based on the realization that a damaging movement can give rise to a damaging thermal event within a matter of nanoseconds, connector assembly 100, according to the present invention, includes prevention mechanisms 160 and 260 integral thereto. While optical power source 152 is on, prevention mechanisms 160 and 260 preclude damaging movement within the connector assembly of fiber 102 and 202.

In particular, tab 140 and shoulder 145 are part of prevention mechanism 160 that is integral to connector assembly 100. Tab 240 and shoulder 245 are part of prevention mechanism 260 that is also integral to connector assembly 100.

Figure 4 shows, in more detail, prevention mechanism 260 according to one embodiment of the invention. Figure 4 is a cross-section of a portion of mounting receptacle 130 and a portion of connector 220 into which respective portions of prevention mechanism 260 are embedded. Prevention mechanism 260 includes a locking mechanism, which includes tab 240 and shoulder 245 that locks with tab 240. As described above, tab 240 locks into shoulder 245 when protrusion 250 of tab 240 fits into recess 255 in shoulder 245, which occurs when connector 220 slides to a certain position within mounting receptacle 130. Once locked, connector 220 is not movable with respect to mounting receptacle 130 until tab 240 is depressed by a clearance distance―the distance necessary for protrusion 250 to clear the point where recess 255 intersects with non-recessed portion 257 of shoulder 245. When the locking mechanism is engaged it precludes the damaging movement within the connector assembly of the optical fiber cables.

Prevention mechanism 260 also includes an indication generator. The indication generator includes actuator 270 connected to mounting receptacle 130 and coupled to shoulder 245 by passing through it. The indication generator also includes switch 275, which can be closed by actuator 270. The indication generator generates an indication as to whether the locking mechanism is engaged.

In operation, connector 220 is placed into mounting receptacle 130 so that protrusion 250 fits into recess 255 locking tab 240 with shoulder 245. When tab 240 locks with shoulder 245 the locking mechanism is engaged and fiber 202 cannot be moved within assembly 100, thus preventing any damaging movement.

Additionally, when tab 240 locks with shoulder 245 actuator 270 is pushed up, closing switch 275, such as for example by pushing contact 290 into electrical contact with contact 295, thus closing the circuit that includes these contacts. Closing the circuit causes a signal to be sent along wire 280 to optical power source 152 indicating that the shoulder is locked with the tab, i.e. that the locking mechanism is engaged. Optionally, responsive to the indication that the locking mechanism is engaged, optical power source 152 can either turn on if it is off, or it can increase the amount of optical power it generates if it is on, thus increasing the optical power propagating through fiber 202. (A similar action occurs responsive to the indication that the locking mechanism is engaged in the below-described embodiments.)

When tab 240 is depressed by a clearance distance, protrusion 250 clears point where recess 255 intersects with non-recessed portion 257 of shoulder 245, unlocking tab 240 from shoulder 245. At this point actuator 270 is released, thus opening switch 275, such as for example by allowing contact 290 to separate from contact 295, thus opening the circuit that includes these contacts. Opening the circuit causes a signal to be sent along wire 280 to optical power source 152 indicating that the shoulder is not locked with the tab, i.e., that the locking mechanism is disengaged. Thus, switch 275 generates the indication of whether the switch is engaged or disengaged responsive to the position of the actuator. Responsive to the indication that the locking mechanism is disengaged optical power source 152 either turns off or reduces the optical power it generates, thus reducing the optical power propagating through fiber 202. The reduction of the optical power below the damage threshold, such as by turning off or reducing the the optical power generated by the laser, should occur no more than 100 pico seconds from misalignment of the exposed ends 103 and 203. This misalignment may occur once the tabs of connectors 120 and 220 allow the fiber ends to move. Typically, the turning off or reduction of the laser should be at most 200 ms from the depression of the tab, but preferably it is any value between 50 ms to 100 pico seconds from the time tab the initiation of the depression of the tab. Upon the disengagement of the locking mechanism fiber 202 can be moved, but since the optical power carried by fiber 202 has been reduced, or turned off, the movement of fiber 202 should not cause a damaging thermal event. (A similar action occurs responsive to the indication that the locking mechanism is disengaged in the below-described embodiments.)

Figure 5 shows, in more detail, prevention mechanism 160 according to another embodiment of the invention. Figure 5 is a cross-section of a portion of mounting receptacle 130 and a portion of connector 120 into which respective portions of prevention mechanism 160 are embedded. Similarly to prevention mechanism 260, prevention mechanism 160 includes a locking mechanism, which includes tab 140 and switch 170 located on shoulder 145. Switch 170 locks with tab 140. Switch 170 is also part of prevention mechanism 160's indication generator.

In operation, connector 120 is placed into mounting receptacle 130 so that protrusion 150 fits into recess 155 locking tab 140 with switch 170 and shoulder 145. When tab 140 locks with switch 170 it closes a circuit that includes switch 170. Closing the circuit causes a signal to be sent along wire 180 to optical power source 152 indicating that switch 170 is locked with tab 140, i.e., that the locking mechanism is engaged.

When tab 140 is depressed by a clearance distance, protrusion 150 clears point where recess 155 intersects with non-recessed portion 157 of shoulder 145, unlocking tab 140 from switch 170 and, thus, opening the circuit that includes switch 170. Opening the circuit causes a signal to be sent along wire 180 to optical power source 152 indicating that the shoulder is not locked with the tab, i.e., that the locking mechanism is disengaged.

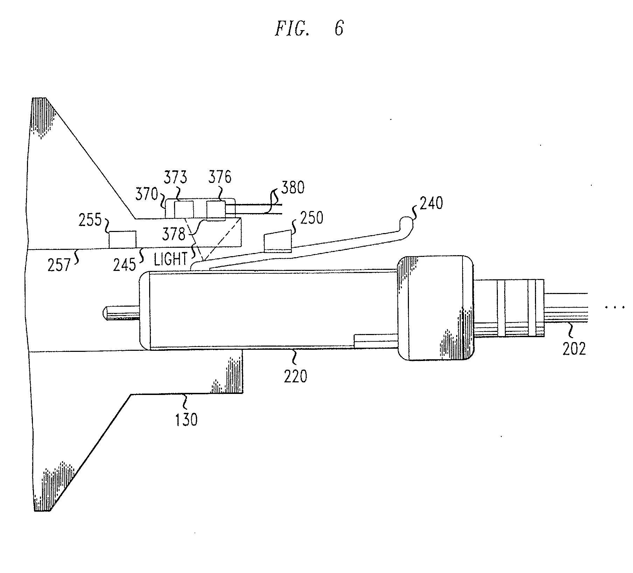

Figure 6 shows prevention mechanism 360 according to yet another embodiment of the invention. Figure 6 is a cross-section of a portion of mounting receptacle 230 and a portion of connector 220. Respective portions of prevention mechanism 360 can be embedded into connector 220 and mounting receptacle 230. The locking mechanism of prevention mechanism 360 is the same as that of prevention mechanism 260.

Prevention mechanism 360 also includes an indication generator, which includes a transducer, such as a photodiode, such as for example LED transducer 370 having LED transmitter 373 and receiver 376. Optionally, LED transducer also includes spatial filter 278, which rejects external light in order to prevent the external light from affecting the transducer. When protrusion 250 fits into recess 255 locking tab 240 with shoulder 245, the light beam generated by LED transmitter 373 is reflected off of tab 240 and is received by receiver 376. When the light is received by receiver 376 a signal is sent along wire 280 to optical power source 152 indicating that the shoulder is locked with the tab, i.e., that the locking mechanism is engaged.

When tab 240 is depressed by a clearance distance, protrusion 250 clears point where recess 255 intersects with non-recessed portion 257 of shoulder 245, unlocking tab 240 from shoulder 245. At this point the light beam generated by LED transmitter 373 is reflected off of tab 240 in a direction where it is not received by receiver 376. When the light is not received by receiver 376 a signal is generated to be sent along wire 280 to optical power source 152 indicating that the shoulder is not locked with the tab, i.e., that the locking mechanism is disengaged.

As can be seen in Figure 1, which shows prevention mechanism 160 and 260 used in connector assembly 100, different prevention mechanisms can be used in the same connector assembly as long as the prevention mechanisms preclude damaging movement of the fibers within the connector assembly while the optical power source is on.

A connector assembly according to the principles of the invention provides the advantages of being lightweight, inexpensive to manufacture, it engenders no additional footprint overhead, and it is mechanically simple and reliable. These characteristics are particularly advantageous in applications in which many connectors are closely spaced in arrays.

A further advantage is that connectors embodying the principles of the invention may be easily retrofitted into existing installations. For example, if the connector assembly is to be used on a circuit panel, then in some embodiments, only the panel's alignment socket (the part of the connector assembly that connects the two male connectors) needs to be changed. Such a connector assembly can then be used with conventional male connectors. Similarly, if the connector assembly is to be used with a mounting receptacle, then in some embodiments, only the mounting receptacle needs to be changed. In embodiments where the connectors do not have a tab, the connectors may need to also be changed to comply with the present invention.

The foregoing is merely illustrative and various alternatives will now be discussed. The illustrative embodiment is described as having a mounting receptacle. Alternative embodiments may not use the mounting receptacle. For example, two connectors may connect directly to each other. In this case, the connector assembly would have just one prevention mechanism. Such a prevention mechanism could use a locking mechanism that includes a tab, which would be part of one of the connectors, and a shoulder of the other connector for locking with the tab. When this locking mechanism is engaged it precludes the damaging movement within the connector assembly of the optical fiber cables.

In the illustrative embodiments, the connector assembly is illustrated with male connectors. In alternative embodiments, the connector assembly can include any type of connectors, including female connectors, or a combination of male and female connectors.

In the illustrative embodiment the indication of whether the locking mechanism is engaged is transmitted on wires. In alternative embodiments, any means of transmitting the indication from the prevention mechanism to the optical power source can by used. For example, an RF or optical wireless transmitter at the connector assembly and an RF or optical, respectively, wireless receiver at optical power source can be used instead of the wires. The wireless transmitter can be coupled to the locking mechanism by any means, including wires. Similarly the wireless receiver can be coupled to the optical power source by any means, including wires.

In the illustrative embodiments, the locking mechanism includes a tab that locks with a shoulder of the mounting receptacle. In alternative embodiments, the locking device can be any device that can lock with the mounting receptacle or, optionally, with another connector. Furthermore, although a particular type of tab is shown in the illustrative embodiments, the tab can be any type of tab that can lock with a surface of the mounting receptacle or, optionally, with another connector. For example, other tabs that can be used include: reverse detents, where protrusion in the shoulder fits into an recess in the tab; horizontal locks, where protrusion on the tab is on the horizontal surface of the tab; multiple protrusions, either in the horizontal or vertical surfaces (or both) of the tab; or threaded rear locking nuts, where a threaded hollow nut is slid over the fiber engaging a portion of the connector and engaging a threaded shoulder attached mounting receptacle.

Thus, while the invention has been described with reference to a preferred embodiment, it will be understood by those skilled in the art having reference to the specification and drawings that various modifications and alternatives are possible therein without departing from the scope of the invention.

## Claims

1. A connector assembly (100) comprising:
a prevention mechanism integral to the connector assembly (100), the prevention mechanism being adapted to preclude a damaging movement within the connector assembly (100) of at least two optical fiber cables (102, 202) that are coupled in the connector assembly (100),
the damaging movement being a movement that would give rise to a damaging thermal event when at least one of the optical fiber cables (102, 202) is carrying a high-optical-power-density signal.

2. The invention of claim 1, further comprising:
a first connector (120) adapted to receive a first optical fiber cable (102) having an end (103); and
a second connector (220) adapted to receive a second optical fiber cable (202) having an end (203), the second connector (220) being adapted to be coupled to the first connector (120) in such a way that the end (203) of the second optical fiber cable (202) is coupled to the end (103) of the first optical fiber cable (102); and
wherein at least a portion of the prevention mechanism is embedded in one of the connectors.

3. The invention of claim 0, wherein the connector assembly (100) further comprises a mounting receptacle (130) adapted to couple between the first and the second connectors (120, 220) in such a way that the coupled ends (103, 203) are coupled within the mounting receptacle (130).

4. A high-optical-power-density optical system comprising:
at least two cables (102, 202), each cable having an end (103, 203);
an optical power source (152) coupled to at least one of the cables, the optical power source (152) being adapted to generate a high-optical-power-density signal; and
the connector assembly (100) of claims 0 or 0 wherein the connector assembly (100) couples the two ends (103, 203) of the at least two cables (102, 202).

5. The invention of claims 0, 0, or 0, wherein
the coupling of the two optical fiber cables (102, 202) includes coupling an end (103) of the one of the two optical fiber cables to an end (203) of the other of the two optical fiber cables; and
the damaging movement comprises a movement of the ends (103, 203), the movement being in any plane and being at least 1 wavelength of the signal.

6. The invention of claim 0, 0, or 0, wherein the damaging thermal event comprises a dissipation of optical power producing local heating that results in physical damage to at least one of the following: one of the optical fiber cables (102, 202), the connector assembly (100), an optical power source (152) of the high-optical-power-density signal.

7. The invention of claims 0, 0, 0, wherein the prevention mechanism comprises:
a locking mechanism engageable to preclude the damaging movement of the optical fiber cables (102, 202) within the connector assembly (100); and
an indication generator adapted to generate an indication as to whether the locking mechanism is engaged.

8. The invention of claim 0, wherein
the locking mechanism comprises:
a tab (250); and
an inner surface (245) of the connector assembly adapted to lock with the tab (250); and
the indication generator comprises:
a actuator (270) coupled to the inner surface; and
a switch (275) coupled to the actuator (270), the switch (275) being adapted to generate the indication responsive to the position of the actuator (270).

9. The invention of claim 0, wherein the connector assembly (100) further comprises:
a tab (150); and
a switch (170) located on an inner surface (145) of the connector assembly, the switch being adapted to lock with the tab (150), the switch being adapted to generate an indication as to whether the switch (170) is locked with the tab.

10. The invention of claim 0, wherein
the locking mechanism comprises:
a tab (250); and
an inner surface (245) of the connector assembly adapted to lock with the tab (250); and
the indication generator comprises:
an optical transducer (370) coupled to the inner surface, the optical transducer (370) adapted to generate the indication responsive to the position of the tab (250).
